(19) Europäisches Patentamt / European Patent Office / Office européen des brevets

(11) **EP 4 230 595 A1**

## (12) EUROPEAN PATENT APPLICATION
published in accordance with Art. 153(4) EPC

(43) Date of publication:
**23.08.2023 Bulletin 2023/34**

(21) Application number: **21879943.5**

(22) Date of filing: **06.10.2021**

(51) International Patent Classification (IPC):
*C03C 17/42* (2006.01)    *B32B 7/022* (2019.01)
*B32B 7/023* (2019.01)    *B32B 7/025* (2019.01)
*B32B 7/12* (2006.01)    *B32B 9/00* (2006.01)
*B32B 9/04* (2006.01)    *B32B 17/10* (2006.01)
*B32B 27/06* (2006.01)    *B60J 1/00* (2006.01)
*C03C 17/38* (2006.01)

(52) Cooperative Patent Classification (CPC):
**B32B 7/022; B32B 7/023; B32B 7/025; B32B 7/12;
B32B 9/00; B32B 9/04; B32B 17/10; B32B 27/06;
B60J 1/00; C03C 17/38; C03C 17/42**

(86) International application number:
**PCT/JP2021/036945**

(87) International publication number:
**WO 2022/080203 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.10.2020 JP 2020173074**

(71) Applicant: **AGC INC.**
**Chiyoda-ku,**
**Tokyo 1008405 (JP)**

(72) Inventors:
• **AOSHIMA, Yuki**
**Tokyo 100-8405 (JP)**
• **MASHIMO, Takahiro**
**Tokyo 100-8405 (JP)**

(74) Representative: **Müller-Boré & Partner**
**Patentanwälte PartG mbB**
**Friedenheimer Brücke 21**
**80639 München (DE)**

## (54) GLASS LAMINATE AND METHOD FOR MANUFACTURING SAME

(57) The present invention provides a glass laminate in which a thin inorganic laminated film having a thickness of 500 nm or less is laminated on the surface of a glass plate and it is possible to suppress a poor appearance such as cracks of the inorganic laminated film during manufacturing and attachment of dust to the surface of the inorganic laminated film during use. A glass laminate (1), in which an inorganic laminated film (30) having a total thickness of 90 to 500 nm is laminated on a surface of a glass plate (10) with an adhesive film (20) including a resin film interposed therebetween, a carbon-containing film (42R) thinner than the inorganic laminated film (30) is attached to a surface of the inorganic laminated film (30), a storage elastic modulus of an outermost surface on the inorganic laminated film (30) side that is measured by a nanoindentation method using a flat punch indenter under conditions of 1 Hz and 28°C is 50 MPa to 30 GPa, and a loss coefficient of the outermost surface on the inorganic laminated film (30) side that is measured by the nanoindentation method using the flat punch indenter under conditions of 1 Hz and 28°C is 0.005 to 0.14.

Fig. 1

**Description**

Technical Field

The present invention relates to a glass laminate and a method for manufacturing the same.

Background Art

In vehicles such as cars, there are cases where an optical sensor system including optical devices such as a camera and a radar that acquire information ahead of the vehicle is installed on the inner surface of the windshield for automatic driving, prevention of collision accidents and the like.

In order to improve the sensing accuracy, it is preferable to provide an antireflection film (AR film) and/or a transparent anti-fogging electric heating film in a portion of the windshield that is positioned ahead of the optical devices such as the camera and the radar, which are included in the optical sensor system.

Examples of the associated techniques of the present invention include Patent Literature 1 and 2 below.

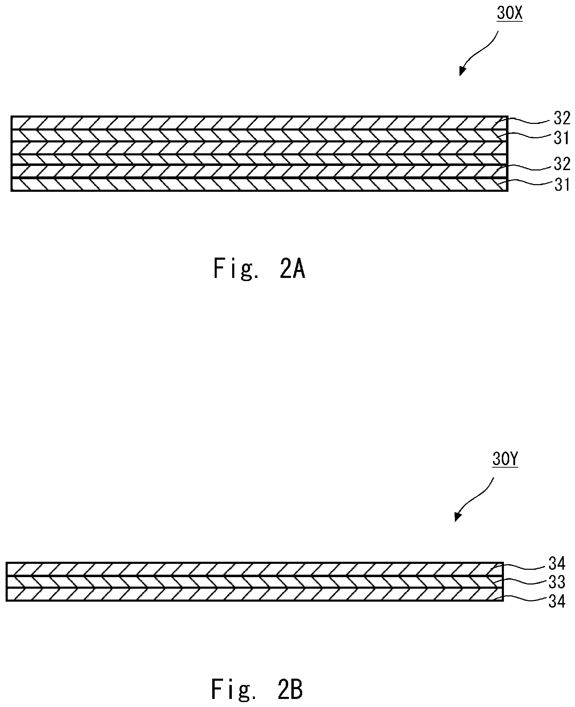

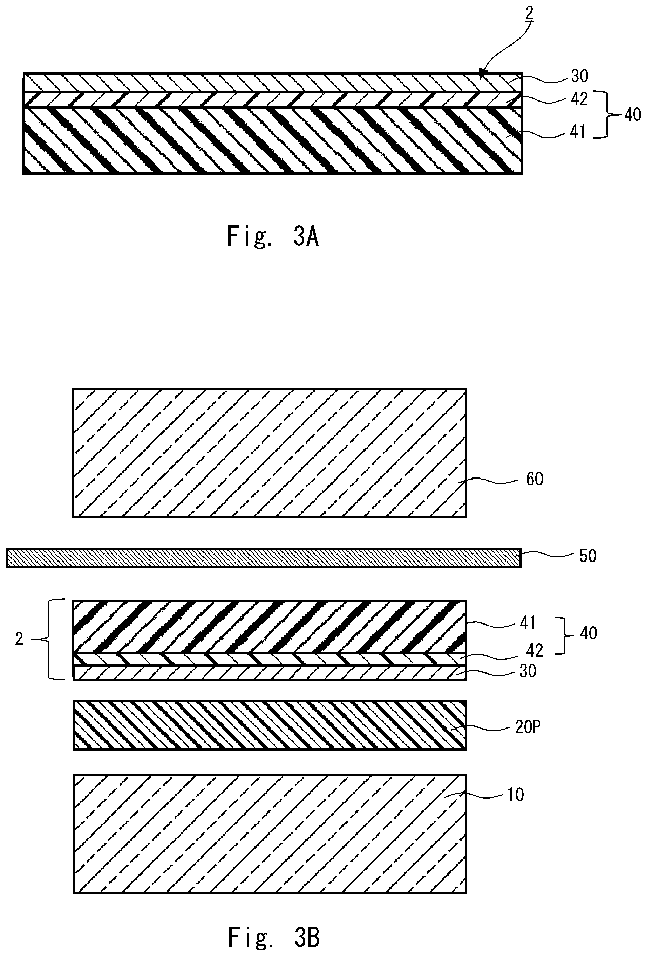

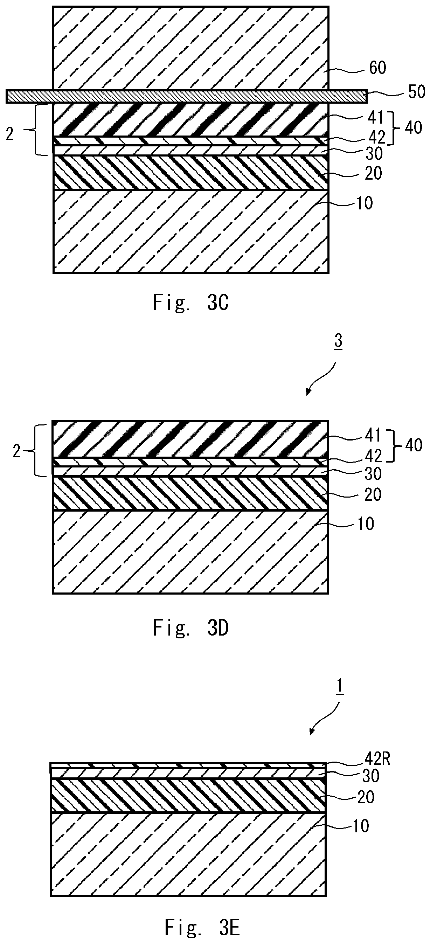

Patent Literature 1 discloses a glass laminate provided with a film capable of heating (3) including a supporting film (3a) and a heating wire (3c) (corresponding to the transparent electric heating film) in a portion (2) of a windshield that is positioned ahead of an optical device such as a camera that is included in an optical sensor system (Claim 1, Fig. 2, Fig. 3 and the like).

Examples of a material of the supporting film (3a) include polybutylene terephthalate, polycarbonate, polyethylene terephthalate, polyethylene naphthalate, polyvinyl butyral and polyethylene vinyl acetate (Claim 5).

Patent Literature 1 does not specifically describe how to form the film capable of heating (3) including the supporting film (3a) and the heating wire (3c) (corresponding to the transparent electric heating film) on the windshield, which is thus unclear.

Patent Literature 2 discloses a transfer film for an anti-fogging heater provided with one or more conductive patterns on a support, the conductive patterns being peelable from the support and transferable to an adherend (Claim 1).

The conductive pattern preferably contains a conductive material, a glass frit and an organic substance that can be removed by firing (Claim 7).

The use of the transfer film as described in Patent Literature 2 makes it possible to transfer a conductive film to a part of the surface of an adherend such as a windshield.

Citation List

Patent Literature

Patent Literature 1: Published Japanese Translation of PCT International Publication for Patent Application, No. 2012-530646
Patent Literature 2: Japanese Unexamined Patent Application Publication No. 2017-168310

Summary of Invention

Technical Problem

Ordinarily, in the optical sensor system, the optical devices such as the camera and the radar are accommodated in a housing, which is called a bracket or the like, in order to prevent dirt, dust and unnecessary light incidence (reference to Patent Literature 1 and Fig. 2 is wished). However, when the duration of use becomes long, there is a concern that dust that is present in the housing or comes into the housing from the outside may accumulate on the surface of the antireflection film (AR film) or transparent electric heating film and the sensing accuracy may deteriorate.

In the "examples" section of Patent Literature 2, a conductive paste containing a glass frit, a Ag powder and an organic binder is printed, heated and dried on a support, thereby forming a conductive pattern having a thickness of 12 $\mu$m (Paragraphs 0066 and 0069).

An antireflection film (AR film) or a transparent electric heating film, which is formed on the surface of a windshield, is preferably formed in a nano-order thickness, for example, a thin thickness of 500 nm or less, so as not to affect sensing.

In a method in which printing is performed using the conductive paste described in Patent Literature 2, it is difficult to form a thin film having a nano-order thickness. Even when a thin film having a nano-order thickness has been formed on a support, there is a concern that a poor appearance such as cracks may be caused in the film in the case of transferring this thin film to the surface of a windshield.

A method in which an antireflection film (AR film) or a transparent electric heating film is directly formed in a small region on the surface of a windshield by vapor deposition, such as sputtering using a mask, without using transfer techniques is conceivable. However, in this method, a film formation device that is large enough to put in a large windshield is required to form a film in a small region, and it is necessary to design the shape and size of the mask depending on the shape and size of the windshield and the mounting position of a housing called a bracket or the like, which increases the cost. It is also difficult to align the mask with a curved windshield. It is also impossible to form a film on the inner surface of a windshield after the completion of a vehicle.

The use of the transfer technique makes it possible to easily form an antireflection film (AR film) or a transparent electric heating film in a small region on the surface of a windshield at a low cost not only before the completion of a vehicle but also after the completion of the vehicle, which is preferable.

As the antireflection film (AR film), an inorganic laminated film in which two dielectric films having different refractive indexes are alternately laminated is preferable. As the transparent electric heating film, an inorganic laminated film including a metal film and a dielectric film is preferable. The use of the transfer technique is preferable since it is possible to transfer a thin inorganic laminated film having a thickness of 500 nm or less to a part of the surface of a glass plate such as a windshield without a poor appearance such as cracks. In addition, the use of the transfer technique is preferable since it is possible to suppress attachment of dust to the surface of the inorganic laminated film.

The present invention has been made in consideration of the above-described circumstances, and an objective of the present invention is to provide a glass laminate in which a thin inorganic laminated film having a thickness of 500 nm or less is laminated on the surface of a glass plate and it is possible to suppress a poor appearance such as cracks of the inorganic laminated film during manufacturing and attachment of dust to the surface of the inorganic laminated film during use.

Solution to Problem

The present invention provides the following glass laminate and method for manufacturing the same.

[1] A glass laminate including an inorganic laminated film laminated on a surface of a glass plate with an adhesive film including a resin film interposed therebetween,

in which a total thickness of the inorganic laminated film is 90 to 500 nm,
a carbon-containing film thinner than the inorganic laminated film is attached to a surface of the inorganic laminated film,
a storage elastic modulus of an outermost surface on the inorganic laminated film side that is measured by a nanoindentation method using a flat punch indenter under conditions of 1 Hz and 28°C is 50 MPa to 30 GPa, and
a loss coefficient of the outermost surface on the inorganic laminated film side that is measured by the nanoindentation method using the flat punch indenter under conditions of 1 Hz and 28°C is 0.005 to 0.14.

[2] A method for manufacturing the glass laminate of [1], including a step (S1) of forming the inorganic laminated film on a mold release layer of a mold release film having the mold release layer formed on a resin base material film, to obtain a mold release film-attached inorganic laminated film,

a step (S2) of adhering the glass plate and the mold release film-attached inorganic laminated film with the adhesive film interposed therebetween, to obtain a mold release film-attached glass laminate, and
a step (S3) of peeling the mold release film off from the mold release film-attached glass laminate.

Advantageous Effects of Invention

In the glass laminate of the present invention, the thin inorganic laminated film having a thickness of 500 nm or less is laminated on the surface of the glass plate with the adhesive film interposed therebetween, and the carbon-containing film thinner than the inorganic laminated film is attached to the surface of the inner laminated film. The glass laminate of the present invention has a specific storage elastic modulus (E') and a specific loss coefficient (tan $\delta$) and has the thin carbon-containing film on the surface and is thereby capable of suppressing a poor appearance such as cracks of the inorganic laminated film during manufacturing and attachment of dust to the surface of the inorganic laminated film during use.

Brief Description of the Drawings

Fig. 1 is a schematic cross-sectional view of a glass laminate of one embodiment according to the present invention;

Fig. 2A is an enlarged schematic cross-sectional view of an example of an inorganic laminated film;

Fig. 2B is an enlarged schematic cross-sectional view of another example of the inorganic laminated film;

Fig. 3A is a schematic cross-sectional view showing a step (S1) of a method for manufacturing a glass laminate of one embodiment according to the present invention;

Fig. 3B is a schematic cross-sectional view showing a step (S2) of the method for manufacturing a glass laminate of one embodiment according to the present invention;

Fig. 3C is a schematic cross-sectional view showing the step (S2) of the method for manufacturing a glass laminate of one embodiment according to the present invention;

Fig. 3D is a schematic cross-sectional view showing the step (S2) of the method for manufacturing a glass laminate of one embodiment according to the present invention;

Fig. 3E is a schematic cross-sectional view showing a step (S3) of the method for manufacturing a glass laminate of one embodiment according to the present invention;

Fig. 4 is laser microscope photographs of surfaces of glass laminates (LG1) and (LG5) obtained in Example 1 and Example 5 (no poor appearance such as cracks is present) ;

Fig. 5 is reflectance spectra of a glass plate (G1) alone, a glass laminate (AR/G1) and glass laminates (LG1), (LG3) and (LG9) ;

Fig. 6 is laser microscope photographs of surfaces of glass laminates (LG23) and (LG24) obtained in Example 23 and Example 24 (a poor appearance such as cracks is present) ; and

Fig. 7 is a laser microscope photograph of a surface of a glass laminate (LG26) obtained in Example 26 (a poor appearance such as cracks is present).

Description of Embodiments

Ordinarily, a thin film structure is referred to as "film", "sheet" or the like depending on the thickness. In the present specification, these will not be clearly differentiated. Therefore, there will be cases where "film" mentioned in the present specification includes "sheet".

In the present specification, unless particularly otherwise described, "to" indicating a numerical range will be used to mean that numerical values described before and after "to" are included as the lower limit value and the upper limit value.

Hereinafter, an embodiment of the present invention will be described.

[Glass Laminate]

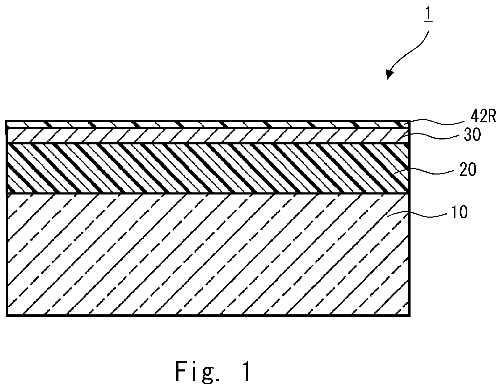

The structure of a glass laminate of one embodiment according to the present invention will be described with reference to drawings. Fig. 1 is a schematic cross-sectional view of the glass laminate of the present embodiment. Fig. 2A and Fig. 2B are examples of an enlarged schematic cross-sectional view of an inorganic laminated film. In order for better visibility, the scale of each configuration element is appropriately varied as appropriate from the actual scale.

A glass laminate 1 of the present embodiment has a laminate structure in which a thin inorganic laminated film 30 having a thickness of 500 nm or less is laminated on the surface of a glass plate 10 with an adhesive film 20 including a resin film interposed therebetween. A carbon-containing film 42R thinner than the inorganic laminated film 30 is attached to the surface of the inorganic laminated film 30.

The glass plate 10 and the adhesive film 20 are preferably in contact with each other. The adhesive film 20 and the inorganic laminated film 30 are preferably in contact with each other.

The glass laminate 1 of the present embodiment can be preferably applied to, for example, glass for vehicles such as cars.

In vehicles such as cars, there are cases where an optical sensor system including optical devices such as a camera and a radar that acquire information ahead of the vehicle is installed on the inner surface of the windshield for automatic driving, prevention of collision accidents and the like. Ordinarily, in this optical sensor system, the optical devices such as the camera and the radar are accommodated in a housing, which is called a bracket or the like, in order to prevent dirt, dust and unnecessary light incidence.

In order to improve the sensing accuracy, an antireflection film (AR film) and/or a transparent anti-fogging electric heating film are preferably provided in a portion of the windshield that is positioned ahead of the optical devices such as the camera and the radar, which are included in the optical sensor system.

The glass laminate 1 of the present embodiment can be applied to, for example, a portion of a windshield that is positioned ahead of the optical devices such as the camera and the radar that are included in the optical sensor system. In this case, the glass laminate 1 may have, for example, a structure in which the inorganic laminated film 30 including an antireflection film (AR film) and/or a transparent electric heating film is laminated on a part of the surface of the glass plate 10 including a windshield with the adhesive film 20 including a resin film interposed therebetween and the carbon-containing film 42R thinner than the inorganic laminated film 30 is attached to the surface of the inorganic laminated film 30.

The kind of the glass plate 10 is not particularly limited, and examples thereof include soda lime glass, borosilicate glass, aluminosilicate glass, lithium silicate glass, quartz glass, sapphire glass, alkali-free glass and the like. The glass plate 10 may be laminated glass in which a pair of glass plates are pasted together with an intermediate film interposed therebetween. The glass plate may be a plate on which a well-known surface treatment and/or a well-known secondary processing treatment such as reinforcement processing has been performed.

The thickness of the glass plate 10 is not particularly limited and is designed depending on uses. In uses such as vehicle windshields or the like, the thickness is preferably 1 to 3 mm.

The adhesive film 20 includes a resin film. A configuration resin thereof is not particularly limited as long as a resin is capable of preferably adhering the glass plate 10 and the inorganic laminated film 30, but is preferably a resin that is used as an intermediate film in laminated glass. The adhesive film 20 preferably contains one or more resins selected from the group consisting of, for example, polyvinyl butyral (PVB), ethylene vinyl acetate copolymers (EVAs), cycloolefin polymers (COPs) and polyurethane (PU).

A material of the adhesive film 20 is preferably a resin film containing the above-exemplified resin.

The adhesive film 20 may contain, if necessary, one or more additives other than the resin.

The inorganic laminated film 30 is not particularly limited as long as a plurality of inorganic films are laminated. Examples of a material of the inorganic film include metal, metal oxides, metal nitrides, metal oxynitrides, combinations thereof and the like. In the present embodiment, the inorganic laminated film 30 can be formed on a part of the surface of the glass plate 10, for example, in a rectangular shape in a plan view or a shape close thereto according to the shape of a window portion of a housing of an optical sensor system.

The inorganic laminated film 30 can be a functional film that imparts a specific function to a desired region of the glass plate 10. Examples of the function include antireflection (AR), heat reflection, heat absorption, selective transmission or absorption of light or radio waves in a specific wavelength range, electric conduction, heating, decoration, combinations thereof and the like.

As a first aspect of the inorganic laminated film 30, an exemplary example is an antireflection film (AR film) 30X including three or more dielectric multilayer films in which first dielectric films 31 and second dielectric films 32 having different refractive indexes are alternately laminated as shown in Fig. 2A. The antireflection film (AR film) 30X may be a bilayer structure of the first dielectric film 31 and the second dielectric film 32 having different refractive indexes. Examples of a dielectric material include metal oxides such as $Al_2O_3$, $HfO_2$, $Nb_2O_5$, $SiO_2$, $Ta_2O_5$, $TiO_2$, $Y_2O_3$ and $ZrO_2$; metal nitrides such as AlN and $SiN_x$; metal oxynitrides such as AlON and SiON; combinations thereof and the like. In this case, the inorganic laminated film 30 includes a plurality of metal compound films. The inorganic laminated film 30 preferably includes a plurality of metal oxide films. The antireflection film (AR film) 30X can be formed using, among the above-described materials, two kinds of dielectric materials having different refractive indexes. For example, an alternate laminated film of $SiO_2$ and $TiO_2$ is preferable. The number of layers in the antireflection film (AR film) 30X can be designed as appropriate and is, for example, two to nine layers and preferably three to six layers.

As a second aspect of the inorganic laminated film 30, an exemplary example is a transparent electric heating film 30Y including a metal film 33 and dielectric films 34 as shown in Fig. 2B. The transparent electric heating film 30Y preferably has a three-layer structure of the metal film 33 and two dielectric films 34 sandwiching the metal film or a laminate structure of four or more layers in which the dielectric films 34 and the metal films 33 are alternately laminated and the bottom layer and the top layer are the dielectric films 34.

Examples of a material of the metal film 33 include Ag, Au, Cu, Pd, Pt, Ti, Cr, Ni, Al, Zr, W, V, Rh, Ir; alloys thereof; combinations thereof and the like. Examples of a material of the dielectric film 34 include metal oxides such as ZnO, $SnO_2$, $In_2O_3$ (ITO), $WO_3$, $Al_2O_3$, $Ga_2O_5$, $TiO_2$, $Ta_2O_5$ and combinations thereof. In this case, the inorganic laminated film 30 includes the metal film and the metal oxide films. For example, a three-layer film in which a Ag film is sandwiched by two ZnO films is preferable.

A pair of electrodes (not shown) are electrically connected to the transparent electric heating film 30Y. When a current is made to flow in the metal film 33 by applying a voltage between the pair of electrodes connected to the transparent electric heating film 30Y, it is possible to heat the transparent electric heating film 30Y and prevent the fogging of the glass laminate 1 including the transparent electric heating film. When the thickness of the metal film 33 composed of an opaque material such as Ag is reduced, and transparent dielectric films of ZnO or the like are laminated on both surfaces of the metal film, it is possible to improve the transmittance of the entire transparent electric heating film 30Y while sufficiently ensuring the conductivity of the transparent electric heating film 30Y, which is preferable.

In the present embodiment, the total thickness of the inorganic laminated film 30 is preferably designed to an extent that the sensing of an optical sensor system including optical devices such as a camera and a radar is not affected while a desired function is developed. The total thickness of the inorganic laminated film 30 is 90 to 500 nm, preferably 90 to 300 nm and more preferably 90 to 250 nm.

The glass laminate 1 of the present embodiment is manufactured using a transfer technique in which a mold release film-attached inorganic laminated film having the inorganic laminated film 30 formed on a mold release layer of a mold release film is used, the mold release film having the mold release layer formed on a resin base material film.

In the present embodiment, the carbon-containing film 42R is attached to the surface of the inorganic laminated film 30. This carbon-containing film 42R may contain an organic component that remains after the mold release film pasted onto the inorganic laminated film 30 is peeled off. In other words, the carbon-containing film 42R can be a film composed of a residual component of a mold release agent. The thickness of the carbon-containing film 42R is less than 90 nm and, for example, approximately 0.5 to 70 nm.

Ordinarily, in a case where a thin inorganic laminated film having a nano-order thickness of 500 nm or less formed on the mold release film is transferred to the surface of the glass plate, there is a concern that a poor appearance such as cracks may be caused in the inorganic laminated film.

In the present embodiment, the thin inorganic laminated film 30 having a nano-order thickness of 500 nm or less can be favorably transferred to the surface of the glass plate without a poor appearance such as cracks by optimizing the storage elastic modulus (E') and loss coefficient (tan $\delta$) of the outermost surface of the glass laminate 1.

For example, the thin inorganic laminated film 30 having a nano-order thickness of 500 nm or less can be favorably transferred to the surface of the glass plate without a poor appearance such as cracks by optimizing the storage elastic modulus (E') of the adhesive film 20, the thickness of the adhesive film 20, the loss coefficient (tan $\delta$) of the surface of the adhesive film 20 or the combination thereof to optimize the storage elastic modulus (E') and loss coefficient (tan $\delta$) of the outermost surface of the glass laminate 1.

In the present specification, unless particularly otherwise described, "the outermost surface of the glass laminate" is the outermost surface of the glass laminate on the inorganic laminated film side.

In the present specification, unless particularly otherwise described, "the surface of the adhesive film" is the surface of the adhesive film on the inorganic laminated film side.

In the present embodiment, the storage elastic modulus (E') of the outermost surface of the glass laminate 1 on the inorganic laminated film 30 side is 50 MPa to 30 GPa, preferably 50 MPa to 25 GPa and more preferably 60 MPa to 21 GPa.

The loss coefficient (tan $\delta$) of the outermost surface of the glass laminate 1 on the inorganic laminated film 30 side is 0.005 to 0.14, preferably 0.0055 to 0.13 and more preferably 0.0055 to 0.10.

In the present specification, unless particularly otherwise described, "the storage elastic modulus (E') of the outermost surface of the glass laminate on the inorganic laminated film side" is a storage elastic modulus (E') that is measured by a nanoindentation method using a flat punch indenter under conditions of 1 Hz and 28°C and can be measured by a method described in the "examples" section to be described below.

In the present specification, unless particularly otherwise described, "the loss coefficient (tan $\delta$) of the outermost surface of the glass laminate on the inorganic laminated film side" is a loss coefficient (tan $\delta$) that is measured by the nanoindentation method using a flat punch indenter under conditions of 1 Hz and 28°C and can be measured by a method described in the "examples" section to be described below.

In the present specification, "nanoindentation method" is a method in which measurement is performed by changing the excitation frequency while imposing a minute AC signal onto a load DC signal in a quasi-static testing method called a continuous stiffness measurement (CSM).

In the present embodiment, the storage elastic modulus (E') of the surface of the adhesive film 20 on the inorganic laminated film 30 side is preferably 50 MPa to 20 GPa. When the storage elastic modulus (E') of the adhesive film 20 is within the above-described range, the surface of the adhesive film 20 is sufficiently hard, and, regardless of the thickness of the adhesive film 20, the thin inorganic laminated film 30 having a nano-order thickness of 500 nm or less can be favorably transferred to the surface of the glass plate 10 without a poor appearance such as cracks. When the storage elastic modulus (E') of the adhesive film 20 is within the above-described range, it is considered that the elastic modulus difference between the hard glass plate 10, which has a Young's modulus of approximately several tens gigapascals, and the adhesive film 20 and the elastic modulus difference between the adhesive film 20 and the inorganic laminated film 30 are sufficiently small with respect to stress that is generated at the time of peeling off the mold release film and it becomes possible to transfer the inorganic laminated film 30 with no damage thereon.

In the present specification, unless particularly otherwise described, "the storage elastic modulus (E') of the surface of the adhesive film on the inorganic laminated film side" is the storage elastic modulus (E') of the surface of the adhesive film on the inorganic laminated film side in a state of being compressed in the glass laminate 1 that is measured by the nanoindentation method using a flat punch indenter under conditions of 1 Hz and 28°C.

The storage elastic modulus (E') of the surface of the adhesive film in the glass laminate can be measured by removing the inorganic laminated film by etching or the like and measuring the storage elastic modulus on the exposed surface of the adhesive film by the nanoindentation method using a flat punch indenter under conditions of 1 Hz and 28°C.

In a case where a resin film is used as the material of the adhesive film, the storage elastic modulus (E') of the surface of the adhesive film can be measured by placing the resin film on the glass plate, thermally compressing the resin film under the same thermal compression conditions as those at the time of manufacturing the glass laminate and measuring the storage elastic modulus by the nanoindentation method using a flat punch indenter under conditions of 1 Hz and 28°C.

The storage elastic modulus (E') of the surface of the adhesive film on the inorganic laminated film side can be measured by the method described in the "examples" section to be described below.

The storage elastic modulus (E') [MPa] of the surface of the adhesive film 20 on the inorganic laminated film 30 side and the thickness (d) [μm] of the adhesive film 20 preferably satisfy the following formula (1).

$$E' \geq 19000 \times e^{-0.042} \times d \cdots (1)$$

In a case where the storage elastic modulus (E') [MPa] of the surface of the adhesive film 20 and the thickness (d) [μm] of the adhesive film 20 satisfy the formula (1), the thin inorganic laminated film 30 having a nano-order thickness of 500 nm or less can be favorably transferred to the surface of the glass plate 10 without a poor appearance such as cracks.

When the thickness of the adhesive film 20 is sufficiently thin, it is considered that the hardness of the surface of the adhesive film 20 formed on the glass plate 10 reflects the hardness of the glass plate 10 to become substantially high and a poor appearance such as cracks that is caused at the time of transferring the thin inorganic laminated film 30 having a nano-order thickness of 500 nm or less to the surface of the glass plate 10 can be effectively suppressed.

In the glass laminate 1 of the present embodiment, it is considered that the glass plate 10 and the inorganic laminated film 30 are elastic bodies, and the adhesive film 20 is a viscoelastic body. In addition, it is considered that the glass plate 10 and the inorganic laminated film 30, which are elastic bodies, have a higher Young's modulus than the adhesive film 20, which is a viscoelastic body.

The glass laminate 1 of the present embodiment has the adhesive film 20, which is a viscoelastic body, between the glass plate 10, which is an elastic body, and the inorganic laminated film 30, which is an elastic body, as shown in Fig. 1. Therefore, it is considered that the apparent elastic modulus of the entire glass laminate 1 exhibits complex behaviors in which the properties of both an elastic body and a viscoelastic body are combined.

Here, "elastic body" is a substance having a property of deforming when a load is applied thereto and returning to the original when the load is removed. Ordinarily, when a load is applied to a certain elastic body, stress σ and strain ε, which are to be generated, have a proportional relationship, which is represented by the following formula (2). This rule is known as the Hook's law. In the formula, signal E is the Young's modulus and also referred to as the longitudinal elastic modulus or the tensile elastic modulus.

$$\sigma = E \cdot \varepsilon \cdots (2)$$

In a comparative glass laminate in which the inorganic laminated film 30 is directly laminated on the surface of the glass plate 10 without the adhesive film 20 interposed therebetween, when the comparative glass laminate is pressed with an obtuse needle from the inorganic laminated film 30 side, a force that is received from the needle is transmitted to the inorganic laminated film 30 and the glass plate 10 in order. The Young's moduli of the glass plate 10 and the inorganic laminated film 30 are relatively close to each other and both Young's moduli are also relatively large. Therefore, it is considered that a force necessary to generate a crack in the inorganic laminated film 30 and a force necessary to generate a crack in the glass plate 10 are almost the same as each other. Therefore, it is considered that the deformation of the inorganic laminated film 30 is relatively small and a possibility of a crack being generated only in the inorganic laminated film 30 is small.

In the glass laminate 1 of the present embodiment, when the glass laminate is pressed with an obtuse needle from the inorganic laminated film 30 side, a force that is received from the needle is transmitted to the inorganic laminated film 30, the adhesive film 20 and the glass plate 10 in order.

The inorganic laminated film 30 is extremely thin compared with any of the glass plate 10 and the adhesive film 20, and, ordinarily, the Young's modulus of the adhesive film 20 is smaller than the Young's modulus of the inorganic laminated film 30. Therefore, it is considered that the strain of the inorganic laminated film 30 rarely depends on the qualities of the configuration material thereof, but significantly depends on an elastic modulus that corresponds to the Young's modulus of the adhesive film 20 and the force that is transmitted to the adhesive film 20.

In addition, the strain of the inorganic laminated film 30 becomes large compared with the strain of the inorganic laminated film 30 in the above-described comparative glass laminate not having the adhesive film 20. Therefore, in a case where the forces that are received from the needles (loads) are compared with each other under the same conditions, a shear stress that is applied to the inorganic laminated film 30 having a high Young's modulus becomes larger in the glass laminate 1 of the present embodiment than in the above-described comparative glass laminate not having the adhesive film 20. This means that, in the glass laminate 1 of the present embodiment, a crack is generated in the inorganic laminated film 30 by a weaker force than in the above-described comparative glass laminate not having the adhesive film 20.

The present inventors considered that, in order to effectively suppress cracks in the inorganic laminated film 30 in the glass laminate 1 of the present embodiment where cracks are generated in the inorganic laminated film 30 more easily than in the above-described comparative glass laminate not having the adhesive film 20, there is a need to increase the apparent elastic modulus of the entire glass laminate 1 including the glass plate 10 and the adhesive film 20 rather than that of the inorganic laminated film 30 alone.

The present inventors further considered that, in order to increase the apparent elastic modulus of the entire glass laminate 1, it is effective to increase the elastic modulus of the adhesive film 20 itself, to transmit the majority of a force that is transmitted to the adhesive film 20 to the glass plate 10 having a high Young's modulus and to reduce the deformation of the adhesive film 20 as much as possible.

The present inventors investigated a relationship between the dynamic viscoelastic properties of the outermost surface of the glass laminate 1 on the inorganic laminated film 30 side and the generation of cracks in the inorganic laminated film 30 by the nanoindentation method in which an indenter having an appropriate shape is used. In addition, the present inventors found that cracks in the inorganic laminated film 30 can be effectively suppressed by optimizing the dynamic viscoelastic properties of the outermost surface of the glass laminate 1 on the inorganic laminated film 30 side and constructed the formula (1). The formula (1) is a new empirical formula found by the present inventors as a result of their own technical idea and a number of experiments.

The thickness of the adhesive film 20 is preferably 1 to 180 $\mu$m and more preferably 1.5 to 160 $\mu$m. The thicknesses of commercially available resin films for intermediate films in ordinary laminated glass are 200 to 760 $\mu$m, and the thicknesses of adhesive films that are formed using these are 190 to 760 $\mu$m. In the present embodiment, the thickness of the adhesive film 20 is preferably designed to be smaller than the thicknesses of adhesive films that are formed using the resin films for intermediate films in ordinary laminated glass. In such designs, the hardness of the surface of the adhesive film 20 formed on the glass plate 10 is likely to reflect the hardness of the glass plate 10 and a poor appearance such as cracks that is caused at the time of transferring the thin inorganic laminated film 30 having a nano-order thickness of 500 nm or less to the surface of the glass plate 10 can be more effectively suppressed. In addition, when the thickness of the adhesive film 20 is designed to be small, perspective distortion can be suppressed, which is preferable.

The loss coefficient (tan $\delta$) of the surface of the adhesive film 20 on the inorganic laminated film 30 side is preferably 0.1 or less and more preferably 0.010 to 0.095.

In the present specification, unless particularly otherwise described, "the loss coefficient (tan $\delta$) of the surface of the adhesive film on the inorganic laminated film side" is the loss coefficient (tan $\delta$) of the surface of the adhesive film on the inorganic laminated film side in a state of being compressed in the glass laminate 1. In a case where a resin film is used as the material of the adhesive film, the loss coefficient (tan $\delta$) of the surface of the adhesive film is a loss coefficient (tan $\delta$) that is measured by placing the resin film on the glass plate, thermally compressing the resin film under the same thermal compression conditions as those at the time of manufacturing the glass laminate and measuring the loss coefficient by the nanoindentation method using a flat punch indenter under conditions of 1 Hz and 28°C. The loss coefficient (tan $\delta$) of the surface of the adhesive film can be measured by the method described in the "examples" section to be described below.

When the loss coefficient (tan $\delta$) of the surface of the adhesive film 20 is 0.1 or less, a poor appearance such as cracks that is caused at the time of transferring the thin inorganic laminated film 30 having a nano-order thickness of 500 nm or less to the surface of the glass plate 10 can be effectively suppressed.

A relationship of loss coefficient (tan $\delta$) = loss elastic modulus (E")/storage elastic modulus (E') is established.

It is considered that, in a case where the storage elastic modulus (E') of the adhesive film 20 is as large as 50 MPa or more and the loss coefficient of the adhesive film 20 is as small as 0.1 or less, the loss elastic modulus (E") becomes small, deformation energy in the adhesive film 20 is less likely to be relaxed with respect to stress that is generated at the time of peeling off the mold release film and it becomes possible to transfer the inorganic laminated film 30 with no damage thereon.

In the glass laminate 1 of the present embodiment, the carbon-containing film 42R capable of containing a residual component of a mold release agent, which is present on the outermost surface, is capable of functioning as an antistatic film. The antistatic function of this carbon-containing film 42R makes it possible to suppress attachment of dust to the surface of the inorganic laminated film 30 during the use of the glass laminate 1.

Regarding the level of the antistatic performance, it is possible to use, for example, the surface resistivity value as an index.

In glass laminates obtained by directly forming an inorganic laminated film including an antireflection film (AR film) or a transparent electric heating film on a glass plate by a sputtering method, the surface resistivity value of the outermost surface on the inorganic laminated film side is more than $2.0 \times 10^{13}$ Q/□, for example, approximately $2.4 \times 10^{13}$ Q/□. In contrast, in the glass laminate 1 of the present embodiment, the surface resistivity value of the outermost surface on the inorganic laminated film 30 side is lower than the above-described value, for example, $1.0 \times 10^{11}$ to $2.0 \times 10^{13}$ Ω/□.

The carbon-containing film 42R that is present on the outermost surface in the glass laminate 1 of the present embodiment is capable of functioning as an antistatic film, but is not formed by directly attaching an antistatic agent thereto and may contain a residual component of a mold release agent. Therefore, there is a possibility that the C1s binding energy of the carbon-containing film 42R may be different from the C1s binding energies of ordinary antistatic agents containing fluorine.

The C1s binding energies of ordinary antistatic agents containing fluorine and ordinary anti-fingerprint (AFP) coating agents containing fluorine that are measured by X-ray photoelectron spectroscopy (XPS) are, for example, approximately 289 to 299 eV. In contrast, in the present embodiment, the C1s binding energy of the outermost surface of the glass laminate 1 on the inorganic laminated film 30 side that is measured by X-ray photoelectron spectroscopy (XPS) is, for example, 283 to 288 eV and 283 to 285 eV in Examples 1 to 10 in the "examples" section to be described below. This is one proof that the carbon-containing film 42R is not formed using an antistatic agent or an anti-fingerprint (AFP) coating agent, but is composed of a residual component of a mold release agent.

In the present specification, "C1s binding energy" can be measured by a method described in the "examples" section to be described below.

When an organic component attached onto the inorganic laminated film is too much, there is a concern that the function of the inorganic laminated film may be impaired, the transparency of the glass laminate may deteriorate or the like. In the present embodiment, since the carbon-containing film thinner than the inorganic laminated film, which functions as an antistatic film, is formed using a residual component of a mold release agent, it is possible to suppress the deterioration of the function of the inorganic laminated film and the deterioration of the transparency of the glass laminate while obtaining an antistatic function.

The haze of glass laminates where an antireflection film (AR film) or a transparent electric heating film is directly formed on a glass plate and no carbon-containing film is present on the surface is normally less than 0.1%, for example, approximately 0.03%.

In contrast, the haze of the glass laminate 1 of the present embodiment where the carbon-containing film 42R is present on the surface tends to be larger than the haze of glass laminates where an antireflection film (AR film) or a transparent electric heating film is directly formed on a glass plate and no carbon-containing film is present on the surface and is, for example, 0.1% to 1.5% or 0.2% to 1.3%.

[Method for Manufacturing Glass Laminate]

A method for manufacturing a glass laminate of the present invention has

a step (S1) of forming an inorganic laminated film on a mold release layer of a mold release film having the mold release layer formed on a resin base material film, to obtain a mold release film-attached inorganic laminated film,
a step (S2) of adhering a glass plate and the mold release film-attached inorganic laminated film with an adhesive film interposed therebetween, to obtain a mold release film-attached glass laminate, and
a step (S3) of peeling the mold release film off from the mold release film-attached glass laminate.

The method for manufacturing a glass laminate of one embodiment according to the present invention will be described with reference to drawings. Fig. 3A to Fig. 3E are step views showing the method for manufacturing a glass laminate of the present embodiment, and each drawing is a schematic cross-sectional view corresponding to Fig. 1.

(Step (S1))

First, a mold release film 40 having a mold release layer 42 formed on a resin base material film 41 as shown in Fig. 3A is prepared, and the inorganic laminated film 30 is formed on the mold release layer 42 of this mold release film 40 to obtain a mold release film-attached inorganic laminated film 2.

A configuration resin of the resin base material film 41 is not particularly limited, and examples thereof include polyesters such as polyethylene terephthalate (PET) and polybutylene terephthalate; polyolefins such as polyethylene and polypropylene; combinations thereof; and the like. As a mold release agent that configures the mold release layer 42, a well-known agent can be used, and the mold release agent may be a silicone-based agent or a non-silicone-based agent.

The inorganic laminated film 30 can be formed by a well-known method. As the method for forming the inorganic laminated film 30, vapor deposition methods such as a sputtering method and a chemical vapor deposition (CVD) method are preferable.

(Step (S2))

Next, the glass plate 10 and the mold release film-attached inorganic laminated film 2 are adhered to each other with the adhesive film 20 interposed therebetween to obtain a mold release film-attached glass laminate 3 shown in Fig. 3D.

(One Embodiment of Step (S2))

As a material of the adhesive film 20, a resin film 20P for an intermediate film in laminated glass can be used. In this case, the step (S2) can be performed as described below.

As shown in Fig. 3B, the resin film 20P, which is the material of the adhesive film 20, and the mold release film-attached inorganic laminated film 2 are sequentially placed on the glass plate 10 such as a windshield. At this time, the mold release film-attached inorganic laminated film is placed such that the inorganic laminated film 30 comes into contact with the resin film 20P, which is the material of the adhesive film 20.

Furthermore, a dummy glass plate 60 may be placed on the mold release film-attached inorganic laminated film 2. The dummy glass plate 60 is not a configuration element of the glass laminate 1 and is a member that is used to favorably compress the resin film 20P, which is the material of the adhesive film 20. At this time, a protective member 50 such as a protective film (for example, a mold release film) may be interposed between the mold release film-attached inorganic laminated film 2 and the dummy glass plate 60.

In Fig. 3B, in order for better visibility, individual members are drawn to be separated from each other; however, in actual cases, there is no gap formed between members.

Next, a temporary laminate obtained as described above is thermally compressed to obtain a laminate shown in Fig. 3C. The thermal compression can be performed by a well-known method and can be performed using an automatic pressure heating treatment device, an autoclave and the like. Thermal compression conditions such as the temperature, the pressure and the time are not particularly limited and are designed depending on the kind and temperature of the resin film 20P, which is the material of the adhesive film 20. The thermal compression conditions need to be conditions under which the resin film 20P, which is the material of the adhesive film 20, softens and is sufficiently pressurized and the glass plate 10 and the inorganic laminated film 30 are sufficiently adhered to each other with the adhesive film 20 interposed therebetween. For example, it is preferable that the temperature is approximately 80°C to 140°C, the pressure is approximately 0.8 to 1.5 MPa and the time is approximately 60 to 120 minutes.

After the thermal compression, the protective member 50 and the dummy glass plate 60, which have been used if necessary, are removed. After this step, the mold release film-attached glass laminate 3 shown in Fig. 3D is obtained.

(Another Embodiment of Step (S2))

As the material of the adhesive film 20, an optical clear adhesive (OCA) can be used. In this case, normal temperature and pressure adhesion is possible.

As the structure of OCA, a structure in which the resin film 20P containing a pressure-sensitive resin is sandwiched between a pair of peelable protective films is an exemplary example. In the case of using OCA having this structure, it is possible to peel off the protective films on both surfaces and remove the resin film 20P containing a pressure-sensitive resin.

In the case of using OCA having this structure, it is possible to paste the glass plate 10 and the mold release film-attached inorganic laminated film 2 together with the resin film 20P containing a pressure-sensitive adhesive resin interposed therebetween.

The timing of peeling off the protective films on both surfaces of OCA is not particularly limited.

In addition, any of the glass plate 10 and the mold release film-attached inorganic laminated film 2 may be first pasted to the resin film 20P.

In one aspect, it is possible to peel off one protective film of the protective films present on both surfaces of OCA, paste this OCA and the mold release film-attached inorganic laminated film 2 together, peel off the other protective film to obtain a joined body of the resin film 20P and the mold release film-attached inorganic laminated film 2 and paste this joined body to the glass plate 10.

In another aspect, it is possible to peel off one protective film of the protective films present on both surfaces of OCA, paste this OCA and the glass plate 10 together, peel off the other protective film to obtain a joined body of the glass plate 10 and the resin film 20P and paste the mold release film-attached inorganic laminated film 2 to this joined body.

In order to favorably perform the adhesion, a dedicated pasting device may be used. In addition, since there are cases where an air remains inside, a deaeration treatment by vacuum, pressurization or the like may be performed after the adhesion.

(Step (S3))

Next, as shown in Fig. 3E, the mold release film 40 is peeled off from the mold release film-attached glass laminate 3. In this method, the carbon-containing film 42R capable of containing a residual component of a mold release agent is formed on the surface of the inorganic laminated film 30. The glass laminate 1 is manufactured as described above.

In the manufacturing method of the present embodiment, the thin inorganic laminated film 30 having a nano-order thickness of 500 nm or less can be favorably transferred to the surface of the glass plate without a poor appearance such as cracks by optimizing the storage elastic modulus (E') and loss coefficient (tan $\delta$) of the outermost surface of the glass laminate 1.

For example, the thin inorganic laminated film 30 having a nano-order thickness of 500 nm or less can be favorably transferred to the surface of the glass plate without a poor appearance such as cracks by optimizing the storage elastic modulus (E') of the adhesive film 20, the thickness of the adhesive film 20, the loss coefficient (tan $\delta$) of the surface of the adhesive film 20 or the combination thereof to optimize the storage elastic modulus (E') and loss coefficient (tan $\delta$) of the outermost surface of the glass laminate 1.

In the glass laminate 1 of the present embodiment, the carbon-containing film 42R capable of containing a residual component of a mold release agent, which is present on the outermost surface, is capable of functioning as an antistatic film. The antistatic function of this carbon-containing film 42R makes it possible to suppress attachment of dust to the surface of the inorganic laminated film 30 during the use of the glass laminate 1.

As described above, according to the present embodiment, it is possible to provide a glass laminate 1 in which the thin inorganic laminated film 30 having a thickness of 500 nm or less is laminated on the surface of the glass plate 10 and it is possible to suppress a poor appearance such as cracks of the inorganic laminated film 30 during manufacturing and attachment of dust to the surface of the inorganic laminated film 30 during use.

[Uses]

The glass laminate of the present invention can be used in arbitrary uses where a glass plate is used and can be suitably used as a functional glass material having a specific function in a desired region. Examples of the function include antireflection (AR), heat reflection, heat absorption, selective transmission or absorption of light or radio waves in a specific wavelength range, electric conduction, heating, decoration, combinations thereof and the like.

The glass laminate of the present invention can be applied to window glass of vehicles such as cars and the like. For example, the glass laminate can be applied to portions of window glass of vehicles such as cars where an optical sensor system is installed; glass antennas, frequency selection plates and the like that are formed on window glass of vehicles such as cars, buildings, houses and the like.

The glass laminate of the present invention can be applied to glass base materials in display devices such as panel displays such as liquid crystal displays and touch panel displays in which a liquid crystal display and a touch panel are combined together. For example, the glass laminate can be applied to glass base materials in display devices such as mobile phones (including smartphones), personal digital assistants (PDAs) such as tablet personal computers, information equipment such as car navigation systems and headsets, goggles and glasses for virtual reality (VR) experiences.

Examples

Hereinafter, the present invention will be described based on examples, but the present invention is not limited thereto. Examples 1 to 10 are the examples, Examples 21 to 26 are comparative example, and Example 31 is a reference example.

[Evaluation Items and Evaluation Methods]

Evaluation items and evaluation methods are as described below.

(Thickness (d) of Adhesive Film)

The thickness (d) [$\mu$m] of an adhesive film in a glass laminate was measured as described below. The thickness of a glass plate alone was measured in advance using a digital vernier caliper. The total thickness of the obtained glass laminate was measured using the digital vernier caliper, the thickness of the glass plate alone and the thickness of an inorganic laminated film were subtracted from this total thickness, and the thickness (d) [$\mu$m] of the adhesive film in the glass laminate was obtained.

(Storage Elastic Modulus (E') and Loss Coefficient (tan $\delta$))

The storage elastic modulus (E') and loss coefficient (tan $\delta$) of the surface of the adhesive film on the inorganic laminated film side and the storage elastic modulus (E') and loss coefficient (tan $\delta$) of the outermost surface of the glass laminate were measured using a nanoindenter "iMicro" manufactured by KLA Corporation by a nanoindentation method under conditions of 1 Hz and 28°C.

Regarding the adhesive film, measurement was performed on a sample obtained by placing a resin film that was a material of the adhesive film on the glass plate and thermally compressing the resin film under the same thermal compression conditions as those at the time of manufacturing the glass laminate.

The sample was fixed to a specimen support using a thermoplastic temporary adhesive "CRYSTALBOND 555" manufactured by Aremco (fluidization temperature: 48°C). As an actuator, "inForce50", which can be used at a load of up to 50 mN, was selected. As an indenter, a frustoconical flat punch indenter having a flat surface at the tip (Serial No. C-0039696, average diameter of the flat surface at the tip: 54.9 $\mu$m (data from shipment inspection slip)) was used. Measurement was performed with a load changing between 0 to 50 mN. Measurement was performed at 20 places, and the average value was used as data.

Regarding the adhesive film, the value of $19000 \times e^{-0\,042} \times d$ was obtained from the thickness (d) [$\mu$m], and whether or not the measured storage elastic modulus (E') [MPa] satisfied the following formula (1) was confirmed.

$$E' \geq 19000 \times e^{-0.042} \times d \cdots (1)$$

<Haze>

The haze of the glass laminate was measured using a haze meter "HZ-2" manufactured by Suga Test Instruments Co., Ltd. As a light source, a C light source was used, and the outermost surface of the glass laminate on the inorganic laminated film side was used as the incidence surface of measurement light.

(C1s Binding Energy)

The XPS spectrum of the outermost surface of the glass laminate on the inorganic laminated film side was obtained using an X-ray photoelectron spectrometer "PHI5000" manufactured by ULVAC-PHI, Incorporated, and the C1s binding energy was measured.

(Surface Resistivity Value)

The surface resistivity value of the outermost surface of the glass laminate on the inorganic laminated film side was measured using a super megohmmeter "SM-8200" and an electrode for a flat specimen "SME-8311" (both manufactured by Hioki E.E.).

(Perspective Distortion)

Perspective distortion was evaluated according to the German Institute for Standardisation Registered Association No. 52305. The obtained glass laminate was disposed between a zebra board and a screen, and the stripe pattern of the zebra board projected on the screen through the glass laminate was observed. This stripe pattern was compared with the stripe pattern of the zebra board directly projected on the screen without passing through the glass laminate. As a change in the stripe pattern of the zebra board caused by the transmission of the glass laminate, a change in the intervals of the lines of the stripe pattern was measured using a ruler.

When the change in the intervals of the lines of the stripe pattern of the zebra board projected on the screen through the glass laminate was 20% or more with respect to the intervals of the lines of the stripe pattern of the zebra board directly projected on the screen without passing through the glass laminate, "perspective distortion" was determined to "be present (poor)", and, when the change was less than 20%, "perspective distortion" was determined to "be absent (favorable)".

(Poor Appearance)

The surface of the obtained glass laminate on the inorganic laminated film side was observed using a laser microscope, and the presence or absence of a poor appearance such as cracks was evaluated.

(Reflection Spectrum)

Using a spectrophotometer, the reflection spectra of a glass plate (G1) alone, a glass laminate (AR/G1) having an antireflection film (AR film) directly formed on a glass plate and the obtained glass laminate were measured.

[Materials]

Abbreviations of materials used in each example are as described below.

<Glass Plate>

(G1) Soda lime glass plate (10 cm in length $\times$ 10 cm in width, 2.0 mm in thickness).

<Mold Release Film> (All 5 cm in Length $\times$ 5 cm in Width)

(SG2) A mold release film having a mold release layer containing a melamine resin formed on the surface of a polyethylene terephthalate (PET) film, "PANA-PEEL SG-2" manufactured by Panac Industries, Inc.
(NPA) A mold release film having a mold release layer containing a silicone resin formed on the surface of a PET film, "PANA-PEEL NP-75-A" manufactured by Panac Industries, Inc.
(NPC) A mold release film having a mold release layer containing a silicone resin formed on the surface of a PET film, "PANA-PEEL NP-75-C" manufactured by Panac Industries, Inc.

<Resin Film That is Material of Adhesive Film> (All 5 cm in Length $\times$ 5 cm in Width)

(PVB) Polyvinyl butyral films (thickness: 2 $\mu$m, 50 $\mu$m and 200 $\mu$m)
(COP) Cycloolefin polymer films (thickness: 100 $\mu$m, 380 $\mu$m and 760 $\mu$m)
(EVA) Ethylene vinyl acetate copolymer film (thickness: 150 $\mu$m)
(PU) Polyurethane (thickness: 150 $\mu$m and 200 $\mu$m)

<Material of Adhesive Film> (5 cm in Length $\times$ 5 cm in Width)

(OCA)

An optical clear adhesive ("PANACLEAN PDS150HU75" manufactured by Panac Industries, Inc.) was prepared. This OCA has a structure in which a resin film containing a pressure-sensitive resin (thickness: 50 $\mu$m) is sandwiched between a pair of peelable protective films.

[Example 1]

(Step (S1)) Manufacturing of Mold Release Film-Attached Inorganic Laminated Film

A SiO$_2$ film (a dielectric film having a relatively low refractive index, 100 nm in thickness), a TiO$_2$ film (a dielectric film having a relatively high refractive index, 80 nm in thickness), a SiO$_2$ film (24 nm in thickness) and a TiO$_2$ film (13 nm in thickness) were sequentially formed on the mold release layer of the mold release film (SG2) by a sputtering method to form an antireflection film (AR film, total thickness: 217 nm). The SiO$_2$ films were formed by performing sputtering in the presence of Ar/O$_2$ using a Si target. The TiO$_2$ films were formed by performing sputtering in the presence

of Ar/O$_2$ using a Ti target. A mold release film-attached inorganic laminated film as shown in Fig. 3A was obtained as described above.

(Step (S2)) Manufacturing of Mold Release Film-Attached Glass Laminate

The resin film (PVB) (thickness: 2 μm), which was a material of the adhesive film, and the mold release film-attached inorganic laminated film obtained in the above-described step were sequentially placed on the glass plate (G1) such that the inorganic laminated film (the antireflection film (AR film) in this example) came into contact with the resin film (PVB). A protective film (specifically, the same mold release film (unused product) as that used in the step (S1)) and a dummy glass plate were further placed sequentially thereon, and a temporary laminate as shown in Fig. 3C was obtained. This temporary laminate was put into a film bag, and the mouth of the bag was sealed by heating in a vacuum to produce a vacuum bag. This vacuum bag was set in an automatic pressure heating treatment device manufactured by Chiyoda Electric Co., Ltd. and a heating and pressurization treatment was performed. Heating and pressurization conditions were set to 130°C, 1 MPa and 60 minutes. After the end of the heating and pressurization treatment, the vacuum bag was removed from the device, the protective member and the dummy glass were removed, and a mold release film-attached glass laminate as shown in Fig. 3D was obtained.

(Step (S3)) Peeling of Mold Release Film

The mold release film (PVB) was peeled off by hands from the mold release film-attached glass laminate obtained in the above-described step. A glass laminate (LG1) as shown in Fig. 3E was manufactured as described above. Main manufacturing conditions and evaluation results are shown in Table 1 and Table 2. In individual examples in Table 1 and Table 2, conditions not shown in the tables were common conditions.

[Example 2]

(Step (S1)) Manufacturing of Mold Release Film-Attached Inorganic Laminated Film

An Al-doped ZnO (AZO) film (dielectric film, 45 nm in thickness), a Ag film (metal film, 9 nm in thickness) and an AZO film (45 nm in thickness) were sequentially formed on the mold release layer of the mold release film (SG2) by a sputtering method to form a transparent electric heating film (AZO/Ag/AZO, total thickness: 99 nm). The AZO films were formed by performing sputtering in the presence of Ar/O$_2$ using an AZO target obtained by mixing a ZnO powder and an Al$_2$O$_3$ powder in a mass ratio of 98:2 and sintering the mixture. The Ag film was formed by performing sputtering in the presence of Ar using a Ag target. A mold release film-attached inorganic laminated film as shown in Fig. 3A was obtained as described above.

(Step (S2)) Manufacturing of Mold Release Film-Attached Glass Laminate

The resin film (PVB) (thickness: 50 μm), which was a material of the adhesive film, and the mold release film-attached inorganic laminated film obtained in the above-described step were sequentially placed on the glass plate (G1) such that the inorganic laminated film (the transparent electric heating film in this example) came into contact with the resin film (PVB). A heating and pressurization treatment was performed in the same manner as in the step (S2) of Example 1, and a mold release film-attached glass laminate as shown in Fig. 3D was obtained.

(Step (S3)) Peeling of Mold Release Film

The mold release film (PVB) was peeled off by hands from the mold release film-attached glass laminate obtained in the above-described step. A glass laminate (LG2) as shown in Fig. 3E was manufactured as described above. Main manufacturing conditions and evaluation results are shown in Table 1 and Table 2.

[Examples 3, 4, 7, 9, 22 and 23]

Glass laminates (LG3), (LG4), (LG7), (LG9), (LG22) and (LG23) were obtained in the same manner as in Example 1 except that one or more conditions of the kind of the mold release film, the kind of the material of the adhesive film and the thickness of the material of the adhesive film were changed. Main manufacturing conditions and evaluation results are shown in Table 1 and Table 2.

[Examples 5, 6, 8, 10, 21, 24 and 25]

Glass laminates (LG5), (LG6), (LG8), (LG10), (LG21), (LG24) and (LG25) were obtained in the same manner as in Example 2 except that one or more conditions of the kind of the mold release film, the kind of the material of the adhesive film and the thickness of the material of the adhesive film were changed. Main manufacturing conditions and evaluation results are shown in Table 1 and Table 2.

[Example 26]

A glass laminate (LG26) was obtained in the same manner as in Example 1 except that the kind of the material of the adhesive film and the procedure of the step (S2) were changed.

In this example, in the step (S2), one protective film of the protective films present on both surfaces of OCA was peeled off, this OCA and the mold release film-attached inorganic laminated film were pasted together, the other protective film was peeled off to obtain a joined body of the resin film and the mold release film-attached inorganic laminated film and paste this joined body to the glass plate. The obtained laminate was put into a film bag, subjected to a vacuum deaeration treatment and then removed from the bag, thereby obtaining a mold release film-attached glass laminate as shown in Fig. 3D.

Main manufacturing conditions and evaluation results are shown in Table 1 and Table 2.

[Example 31]

A $SiO_2$ film (100 nm in thickness), a $TiO_2$ film (80 nm in thickness), a $SiO_2$ film (24 nm in thickness) and a $TiO_2$ film (13 nm in thickness) were sequentially formed directly on the glass plate (G1) by a sputtering method to form an antireflection film (AR film, total thickness: 217 nm). The film formation method was the same as the step (S1) in Example 1. A glass laminate (AR/G1) having the antireflection film (AR film) directly formed on the glass plate was obtained as described above. Main manufacturing conditions and evaluation results are shown in Table 1 and Table 2.

[Table 1]

[Table 1]

| Example | Mold release film | | Inorganic laminated film | | Adhesive film | | | | | | |
|---|---|---|---|---|---|---|---|---|---|---|---|
| | | | Kind | Total thickness (nm) | Kind | Thickness of material before thermal compression ($\mu$m) | Thickness after thermal compression d ($\mu$m) | E' (MPa) | $19000e^{-0.042}d$ | Formula (1) is satisfied? | Tan $\delta$ |
| 1 | SG2 | Non-silicone-based | AR | 217 | PVB | 2 | 1.9 | 19224 | 17543 | Satisfied | 0.0170 |
| 2 | SG2 | Non-silicone-based | AZO/Ag/AZO | 99 | PVB | 50 | 49.5 | 3309 | 2376 | Satisfied | 0.0230 |
| 3 | NPA | Silicone-based | AR | 217 | COP | 100 | 98.6 | 337 | 302 | Satisfied | 0.0938 |
| 4 | SG2 | Non-silicone-based | AR | 217 | COP | 100 | 99.0 | 337 | 297 | Satisfied | 0.0938 |
| 5 | SG2 | Non-silicone-based | AZO/Ag/AZO | 99 | COP | 100 | 100.2 | 337 | 283 | Satisfied | 0.0938 |
| 6 | SG2 | Non-silicone-based | AZO/Ag/AZO | 99 | EVA | 150 | 147.6 | 52 | 39 | Satisfied | 0.0939 |
| 7 | SG2 | Non-silicone-based | AR | 217 | EVA | 150 | 150.2 | 52 | 35 | Satisfied | 0.0939 |
| 8 | NPA | Silicone-based | AZO/Ag/AZO | 99 | EVA | 150 | 149.1 | 52 | 36 | Satisfied | 0.0939 |
| 9 | NPC | Silicone-based | AR | 217 | COP | 100 | 98.2 | 337 | 307 | Satisfied | 0.0938 |
| 10 | NPA | Silicone-based | AZO/Ag/AZO | 99 | PU | 150 | 148.6 | 43 | 37 | Satisfied | 0.0976 |

| Example | Mold release film | | Inorganic laminated film | | Adhesive film | | | | | | |
|---|---|---|---|---|---|---|---|---|---|---|---|
| | | | Kind | Total thickness (nm) | Kind | Thickness of material before thermal compression ($\mu$m) | Thickness after thermal compression d ($\mu$m) | E' (MPa) | $19000e^{-0.042d}$ | Formula (1) is satisfied? | Tan $\delta$ |
| 21 | SG2 | Non-silicone-based | AZO/Ag/AZO | 99 | COP | 380 | 383.0 | 254 | 0.002 | - | 0.1104 |
| 22 | SG2 | Non-silicone-based | AR | 217 | COP | 760 | 757.5 | 217 | $3.0\times10^{-10}$ | - | 0.1210 |
| 23 | SG2 | Non-silicone-based | AR | 217 | PVB | 200 | 197.3 | 15 | 4.8 | - | 1.1368 |
| 24 | SG2 | Non-silicone-based | AZO/Ag/AZO | 99 | PVB | 760 | 748.0 | 8 | $4.3\times10^{-10}$ | - | 1.0720 |
| 25 | NPA | Silicone-based | AZO/Ag/AZO | 99 | PU | 200 | 202.0 | 26 | 3.9 | - | 0.3030 |
| 26 | SG2 | Silicone-based | AR | 99 | OCA | 50 | 500 | 0.113 | 2327.0 | - | 0.3820 |
| 31 | - | - | AR | 217 | - | - | - | - | - | - | - |

[Table 2]

[Table 2]

| Example | | E' (MPa) | Tan δ | Haze (%) | C1s binding energy (eV) | Surface resistivity value (Ω/□) | Perspective distortion | Poor appearance |
|---|---|---|---|---|---|---|---|---|
| | | | | | Glass laminate | | | |
| 1 | LG1 | 18308 | 0.0171 | 0.23 | 284.3 | $8.8 \times 10^{11}$ | No | No |
| 2 | LG2 | 3508 | 0.0189 | 0.46 | 284.3 | $2.5 \times 10^{11}$ | No | No |
| 3 | LG3 | 20608 | 0.0056 | 0.87 | 283.6 | $5.4 \times 10^{12}$ | No | No |
| 4 | LG4 | 413 | 0.0798 | 0.40 | 284.3 | $9.4 \times 10^{11}$ | No | No |
| 5 | LG5 | 376 | 0.0881 | 0.38 | 284.3 | $3.7 \times 10^{11}$ | No | No |
| 6 | LG6 | 67 | 0.1218 | 0.52 | 284.3 | $1.8 \times 10^{12}$ | No | No |
| 7 | LG7 | 74 | 0.1336 | 0.52 | 284.3 | $6.2 \times 10^{12}$ | No | No |
| 8 | LG8 | 69 | 0.1177 | 0.91 | 283.6 | $6.2 \times 10^{12}$ | No | No |
| 9 | LG9 | 14723 | 0.0101 | 1.30 | 284.3 | $1.3 \times 10^{13}$ | No | No |
| 10 | LG10 | 61 | 0.1298 | 1.40 | 283.6 | $1.8 \times 10^{12}$ | No | No |
| 21 | LG21 | 201 | 0.1509 | 1.60 | - | $2.7 \times 10^{12}$ | Yes | Yes |
| 22 | LG22 | 189 | 0.1578 | 2.10 | - | $5.2 \times 10^{12}$ | Yes | Yes |
| 23 | LG23 | 16 | 1.1452 | 7.60 | - | $8.8 \times 10^{11}$ | Yes | Yes |
| 24 | LG24 | 8.2 | 1.2260 | 11.20 | - | $9.2 \times 10^{11}$ | Yes | Yes |
| 25 | LG25 | 15 | 0.4190 | 1.80 | - | $3.2 \times 10^{12}$ | Yes | Yes |
| 26 | LG26 | 0.284 | 0.2200 | 12.30 | - | $8.6 \times 10^{13}$ | Yes | Yes |
| 31 | AR/G1 | - | - | 0.03 | - | $2.4 \times 10^{13}$ | No | No |

[Summary of Results]

In Examples 1 to 10, the inorganic laminated film was formed on the mold release layer of the mold release film, and the inorganic laminated film was transferred using the obtained mold release film-attached inorganic laminated film, thereby manufacturing the glass laminates (LG1) to (LG10). In these examples, the glass laminates in which the thin inorganic laminated film having a thickness of 500 nm or less was laminated on the surface of the glass plate with the adhesive film including the resin film interposed therebetween were manufactured.

In Examples 1 to 10, the thin inorganic laminated film having a nano-order thickness of 500 nm or less could be favorably transferred to the surface of the glass plate without a poor appearance such as cracks by optimizing the storage elastic modulus (E') of the adhesive film, the thickness of the adhesive film, the loss coefficient (tan δ) of the surface of the adhesive film or the combination thereof to optimize the storage elastic modulus (E') and loss coefficient (tan δ) of the outermost surface of the glass laminate.

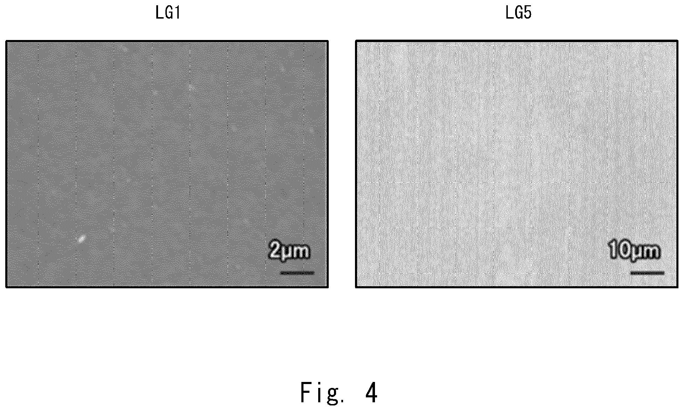

As representatives, the laser microscope photographs of the surfaces of the glass laminates (LG1) and (LG5) obtained in Example 1 and Example 5 are shown in Fig. 4. In the photographs, states where a poor appearance such as cracks is not present are shown.

In glass laminates obtained by directly forming an inorganic laminated film including an antireflection film (AR film) or a transparent electric heating film on the glass plate (G1) by a sputtering method and further applying an ordinary anti-fingerprint (AFP) coating agent containing fluorine thereto, the C1s binding energies of the outermost surfaces on the inorganic laminated film side that were measured by X-ray photoelectron spectroscopy (XPS) were approximately 289 to 299 eV.

In contrast, in the glass laminates (LG1) to (LG10) obtained using a transfer technique in Examples 1 to 10, the C1s binding energies of the outermost surfaces on the inorganic laminated film side that were measured by X-ray photoelectron spectroscopy (XPS) were, unlike the above-described values, 283 to 288 eV (283 to 285 eV).

In the glass laminate (AR/G1) having the antireflection film (AR film) directly formed on the glass plate, the haze was 0.03%. In contrast, in the glass laminates (LG1) to (LG10) obtained using a transfer technique in Examples 1 to 10, the haze was higher than the above-described value and was 0.1 to 1.5% (0.2 to 1.4%).

In the glass laminate (AR/G1) having the antireflection film (AR film) directly formed on the glass plate, the surface resistivity value of the outermost surface on the inorganic laminated film side was $2.4 \times 10^{13}$ Q/□. In contrast, in the glass laminates (LG1) to (LG10) obtained using a transfer technique in Examples 1 to 10, the surface resistivity values of the outermost surfaces on the inorganic laminated film side were lower than the above-described value and were $1.0 \times 10^{11}$ to $2.0 \times 10^{13}$ Ω/□.

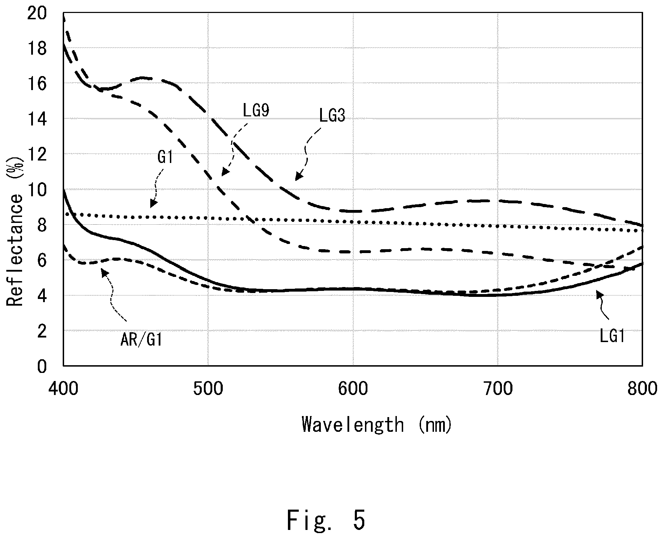

The reflection spectra of the glass plate (G1) alone, the glass laminate (AR/G1) having the antireflection film (AR film) directly formed on the glass plate and the glass laminates (LG1) to (LG10) obtained in Examples 1 to 10 were measured. The reflection spectra of main samples are shown in Fig. 5.

The reflection spectra of the glass laminates (LG1) to (LG10) obtained in Examples 1 to 10 deviated from the reflection spectrum of the glass laminate (AR/G1) having the antireflection film (AR film) directly formed on the glass plate. Particularly, the reflection spectra of the glass laminates obtained in Examples 3, 8 and 9 where the silicone-based mold release film was used as the mold release film significantly deviated from the reflection spectrum of the glass laminate (AR/G1) having the antireflection film (AR film) directly formed on the glass plate.

From the data of XPS, the haze, the surface resistivity values and the reflection spectra, it was found that, in the glass laminates (LG1) to (LG10) obtained in Examples 1 to 10, a carbon-containing film composed of a residual component of the mold release layer of the mold release film was attached to the surface of the inorganic laminated film, and this carbon-containing film was capable of functioning as an antistatic film. The antistatic function of this carbon-containing film makes it possible to effectively suppress attachment of dust to the surface of the inorganic laminated film during the use of the glass laminate.

As a result of performing optical calculation based on the optical constant and reflection spectrum of each metal oxide film that configured the inorganic laminated film, it was inferred that the thicknesses of the carbon-containing films attached to the glass laminates (LG1) to (LG10) obtained in Examples 1 to 10 were approximately 0.7 to 60 nm.

In the glass laminates (LG1) to (LG10) obtained in Examples 1 to 10, perspective distortion was also few and favorable.

In Examples 21 to 26, the storage elastic moduli (E') of the adhesive films, the thicknesses of the adhesive films, the loss coefficients (tan δ) of the surfaces of the adhesive films or the combinations thereof were not appropriate, the storage elastic moduli (E') and loss coefficients (tan δ) of the glass laminates were not appropriate, and cracks were generated at the time of transferring the thin inorganic laminated films having a nano-order thickness of 500 nm or less to the surfaces of the glass plates.

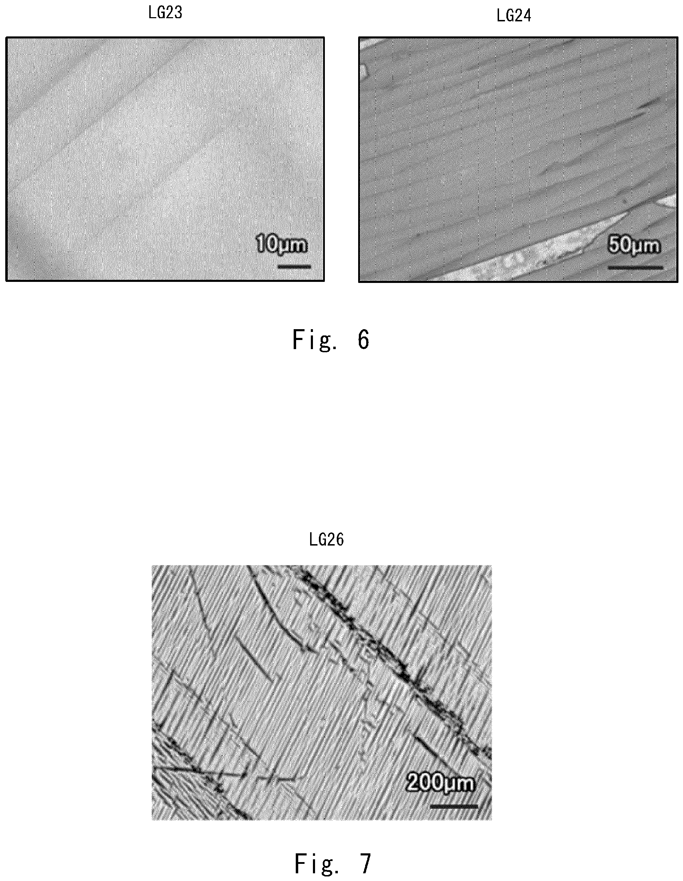

As representatives, the laser microscope photographs of the surfaces of the glass laminates (LG23), (LG24) and (LG26) obtained in Examples 23, 24 and 26 are shown in Fig. 6 and Fig. 7. In the photographs, states where cracks are present are shown.

In the glass laminates (LG21) to (LG26) obtained in Examples 21 to 26, perspective distortion was also present and poor.

This application claims priority on the basis of Japanese Patent Application No. 2020-173074 filed on October 14, 2020, the entire disclosure of which is incorporated herein by reference.

Reference Signs List

1: GLASS LAMINATE, 2: MOLD RELEASE FILM-ATTACHED INORGANIC LAMINATED FILM, 3: MOLD RELEASE FILM-ATTACHED GLASS LAMINATE, 10: GLASS PLATE, 20: ADHESIVE FILM, 20P: RESIN FILM, 30: INORGANIC LAMINATED FILM, 30X: ANTIREFLECTION FILM (AR FILM), 30Y: TRANSPARENT ELECTRIC HEATING FILM, 31, 32, 34: DIELECTRIC FILM, 33: METAL FILM, 40: MOLD RELEASE FILM, 41: RESIN BASE MATERIAL FILM, 42: MOLD RELEASE LAYER, 42R: CARBON-CONTAINING FILM.

**Claims**

1. A glass laminate comprising:

an inorganic laminated film laminated on a surface of a glass plate with an adhesive film comprising a resin film interposed therebetween,
wherein a total thickness of the inorganic laminated film is 90 to 500 nm,
a carbon-containing film thinner than the inorganic laminated film is attached to a surface of the inorganic laminated film,
a storage elastic modulus of an outermost surface on the inorganic laminated film side that is measured by a nanoindentation method using a flat punch indenter under conditions of 1 Hz and 28°C is 50 MPa to 30 GPa, and a loss coefficient of the outermost surface on the inorganic laminated film side that is measured by the nanoindentation method using the flat punch indenter under conditions of 1 Hz and 28°C is 0.005 to 0.14.

2. The glass laminate according to Claim 1, wherein a storage elastic modulus of a surface of the adhesive film on the inorganic laminated film side that is measured by the nanoindentation method using the flat punch indenter under conditions of 1 Hz and 28°C is 50 MPa to 20 GPa.

3. The glass laminate according to Claim 1 or 2, wherein the storage elastic modulus (E') [MPa] of a surface of the adhesive film on the inorganic laminated film side that is measured by the nanoindentation method using the flat punch indenter under conditions of 1 Hz and 28°C and a thickness (d) [$\mu$m] of the adhesive film satisfy the following formula (1):

$$E' \geq 19000 \times e^{-0.042} \times d \cdots (1).$$

4. The glass laminate according to any one of Claims 1 to 3, wherein the thickness of the adhesive film is 1 to 180 $\mu$m.

5. The glass laminate according to any one of Claims 1 to 4, wherein a loss coefficient of the surface of the adhesive film on the inorganic laminated film side that is measured by the nanoindentation method using the flat punch indenter under conditions of 1 Hz and 28°C is 0.1 or less.

6. The glass laminate according to any one of Claims 1 to 5, wherein a surface resistivity value of the outermost surface on the inorganic laminated film side is $1.0 \times 10^{11}$ to $2.0 \times 10^{13}$ Ω/□.

7. The glass laminate according to any one of Claims 1 to 6, wherein a C1s binding energy of the outermost surface on the inorganic laminated film side that is measured by X-ray photoelectron spectroscopy is 283 to 288 eV.

8. The glass laminate according to any one of Claims 1 to 7, wherein a haze is 0.1 to 1.5%.

9. The glass laminate according to any one of Claims 1 to 8, wherein the carbon-containing film is composed of a residual component of a mold release agent.

10. The glass laminate according to any one of Claims 1 to 9, wherein the inorganic laminated film is an antireflection film comprising a plurality of metal compound films containing at least one metal compound selected from the group consisting of a metal oxide, a metal nitride and a metal oxynitride.

11. The glass laminate according to any one of Claims 1 to 10, wherein the inorganic laminated film is an electric heating film including a metal film and a metal oxide film.

12. The glass laminate according to any one of Claims 1 to 11, wherein the adhesive film contains one or more resins selected from the group consisting of polyvinyl butyral, an ethylene vinyl acetate copolymer, a cycloolefin polymer and polyurethane.

13. The glass laminate according to any one of Claims 1 to 12, wherein the glass plate and the adhesive film are in contact with each other.

14. The glass laminate according to any one of Claims 1 to 13, wherein the adhesive film and the inorganic laminated film are in contact with each other.

15. A method for manufacturing the glass laminate according to any one of Claims 1 to 14, comprising:

a step (S1) of forming the inorganic laminated film on a mold release layer of a mold release film having the mold release layer formed on a resin base material film, to obtain a mold release film-attached inorganic laminated film,
a step (S2) of adhering the glass plate and the mold release film-attached inorganic laminated film with the adhesive film interposed therebetween, to obtain a mold release film-attached glass laminate, and a step (S3) of peeling the mold release film off from the mold release film-attached glass laminate.

Fig. 1

30X

32
31
32
31

Fig. 2A

30Y

34
33
34

Fig. 2B

Fig. 3A

Fig. 3B

Fig. 3C

Fig. 3D

Fig. 3E

LG1                                    LG5

2μm                                    10μm

Fig. 4

Fig. 5

LG23

LG24

Fig. 6

LG26

Fig. 7

## INTERNATIONAL SEARCH REPORT

International application No.

**PCT/JP2021/036945**

### A. CLASSIFICATION OF SUBJECT MATTER

*C03C 17/42*(2006.01)i; *B32B 7/022*(2019.01)i; *B32B 7/023*(2019.01)i; *B32B 7/025*(2019.01)i; *B32B 7/12*(2006.01)i; *B32B 9/00*(2006.01)i; *B32B 9/04*(2006.01)i; *B32B 17/10*(2006.01)i; *B32B 27/06*(2006.01)i; *B60J 1/00*(2006.01)i; *C03C 17/38*(2006.01)i

FI: C03C17/42; B32B9/00 A; B32B9/04; B32B17/10; B32B27/06; B32B7/022; B32B7/12; B32B7/025; B32B7/023; C03C17/38; B60J1/00 H

According to International Patent Classification (IPC) or to both national classification and IPC

### B. FIELDS SEARCHED

Minimum documentation searched (classification system followed by classification symbols)

C03C15/00-C03C23/00; B32B1/00-B32B43/00; B60J1/00-B60J1/20; C09J7/00-C09J7/50

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-036866 A (OIKE INDUSTRIAL COMPANY LIMITED) 21 February 2008 (2008-02-21) entire text, all drawings | 1-15 |
| A | WO 2014/010400 A1 (ASAHI GLASS COMPANY LIMITED) 16 January 2014 (2014-01-16) entire text, all drawings | 1-15 |
| A | JP 10-095638 A (SONY CORPORATION) 14 April 1998 (1998-04-14) entire text, all drawings | 1-15 |
| A | US 2005/0153107 A1 (TDK CORPORATION) 14 July 2005 (2005-07-14) entire text, all drawings | 1-15 |
| A | WO 2012/086414 A1 (BRIDGESTONE CORPORATION) 28 June 2012 (2012-06-28) entire text, all drawings | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/036945**

| Patent document cited in search report | | | Publication date (day/month/year) | Patent family member(s) | | | Publication date (day/month/year) |
|---|---|---|---|---|---|---|---|
| JP | 2008-036866 | A | 21 February 2008 | (Family: none) | | | |
| WO | 2014/010400 | A1 | 16 January 2014 | (Family: none) | | | |
| JP | 10-095638 | A | 14 April 1998 | (Family: none) | | | |
| US | 2005/0153107 | A1 | 14 July 2005 | (Family: none) | | | |
| WO | 2012/086414 | A1 | 28 June 2012 | US | 2013/0280447 | A1 | |
| | | | | entire text, all drawings | | | |
| | | | | EP | 2657202 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012530646 W
- JP 2017168310 A
- JP 2020173074 A